# EUROPEAN PATENT APPLICATION

(11) **EP 1 465 067 A2**
(43) Date of publication of application: **06.10.2004**
(21) Application number: 04251936.3
(22) Date of filing: 31.03.2004
(51) Int. Cl.: G06F 9/445

(54) **Operating system for a portable computer and method to load the same**

(30) Priority: 02.04.2003 SG 200301759
(71) Applicant: Trek 2000 International Ltd, Singapore 508769 (SG)
(72) Inventor: Poo, Teng Pin, Singapore 460044 (SG)
(74) Representative: Howe, Steven

(57) **Abstract**

A device comprising a storage medium to store an operating system is provided. The operating system includes a boot program and is portable in that the device allows a user to load a customized operating system into any computer system without having to reconfigure the operating system each time the customized operating system is loaded into a new computer system.

## Description

### Background of the Invention

### 1. Field of the Invention

The present invention relates generally to operating systems. More particularly, the present invention relates to a portable operating system and method to load the same.

### 2. Description of the Related Art

An operating system (OS) is fundamental to a computer system such as a desktop, a laptop or a personal digital assistant (PDA), managing both hardware and software resources of a computer system, for example, the central processing unit (CPU), memory, device drivers and storage. Additionally, an operating system provides a user interface to allow communication and interaction between a user and a computer system. Another important function of the operating system is to provide a standard for communications and data exchange between application programs and the computer system, which is commonly referred to as an application program interface (API). Examples of operating systems include Windows 2000, Linux, Mac OS, Virtual Memory System (VMS), OS/400 and AIX.

Conventionally, the operating system is stored in a hard disk of the computer system before being loaded into random access memory (RAM). Therefore, the operating system is specific to the computer system in which it was installed and is not portable. Accordingly, to attain a desired setting, a user has to configure the operating system in each and every computer system to the desired setting, which can be rather tedious since it may involve installing additional device drivers and application programs, as well as customizing operating system settings, a number of times.

Further, prior to loading the operating system, a seek operation, which involves spinning the hard disk before reading information in the hard disk, is performed to locate the operating system in the hard disk. Consequently, the loading of the operating system is delayed.

The prior art has attempted to solve these problems by booting the DOS operating system from an external storage device. This is not difficult, since the ROM BIOS of a computer typically already has the drivers stored that DOS needs for communicating with an external storage device. However, this approach is of limited use since DOS is no longer the most desirable operating system. Larger, more powerful operating systems, providing more convenient user interfaces, have been developed such as Windows 2000, Linux, Mac OS, Virtual Memory System (VMS), OS/400 and AIX. These operating systems have made DOS largely obsolete. However, the prior-art has no way of implementing these more powerful operating systems on an external storage device.

In view of the foregoing, it would be desirable to have an operating system, such as Windows 2000, Linux, Mac OS, Virtual Memory System (VMS), OS/400 and AIX, that is portable. It would also desirable to have a computer system that can load such operating systems almost instantaneously.

### Summary of the Invention

The present invention fills these needs by providing a portable operating system and method to load the same. It should be appreciated that the present invention can be implemented in numerous ways, including as a process, an apparatus, a system, a device or a method. Several inventive embodiments of the present invention are described below.

In one embodiment of the present invention, a device comprising a storage medium to store an operating system is provided. The operating system includes a boot program and also includes a driver to convert an input/output instruction from the operating system to a message that the storage medium understands. It is portable in that the device allows a user to load a customized operating system into any computer system without having to reconfigure the operating system each time the customized operating system is loaded into a new computer system.

The term "computer system" is used in this document to include any system which employs an operating system. Thus it includes as a primary example a personal computer (PC) such as a desktop or a laptop, but further includes a personal digital assistant (PDA), or even any TV, printer or mobile phone which includes the capability of running an operating system.

The storage medium is preferably a solid-state non-volatile memory device and may be one of a group consisting of a ThumbDrive, a CompactFlash card, a Secure Digital card and a Memory Stick.

In another embodiment of the present invention, a method to load an operating system is provided- The method begins by locating a boot program based on a booting sequence with an external storage medium listed as a first boot device. After which, the boot program is loaded and the loading of the operating system follows. Control of a computer system is preferably passed to the operating system once the operating system is loaded.

The boot program may be loaded from a subsequent boot device in the boot sequence if the external storage medium is not detected. Alternatively, the boot program may be loaded from a subsequent boot device in the boot sequence if the boot program is not available on the external storage medium.

In yet another embodiment of the present invention, a computer system is provided. The computer system includes a basic input/output system to instruct a Central Processing Unit. An interface coupled to the Central Processing Unit interfaces an external storage medium where an operating system is stored. The operating system is to be loaded in a random access memory coupled to the Central Processing Unit.

The interface is preferably one of a group consisting of a Universal Serial Bus (USE), a CompactFlash Input/Output (CF I/O), a Secure Digital Input/Output (SD I/O) or a Memory Stick Input/Output.

Preferably, the basic input/output system is to locate a boot program based on a boot sequence with the external storage medium listed as a first boot device.

In a preferred embodiment, the operating system includes a driver to convert an input/output instruction from the operating system to a message that the external storage medium understands. Preferably, the driver is to adapt the interface to a Small Computer System Interface.

Other aspects and advantages of the invention will become apparent from the following detailed description, taken in conjunction with the accompanying drawings, illustrating by way of example the principles of the invention.

### Brief Description of the Drawings

The present invention will be readily understood by the following detailed description in conjunction with the accompanying drawings. To facilitate this description, like reference numerals designate like structural elements.

Figure 1 illustrates a schematic of a computer system in accordance with one embodiment of the present invention.

Figure 2 illustrates a method to load an operating system in accordance with another embodiment of the present invention.

### Detailed Description of the Preferred Embodiments

A portable operating system and method to load the same are provided. In the following description, numerous specific details are set forth in order to provide a thorough understanding of the present invention. It will be understood, however, to one skilled in the art, that the present invention may be practiced without some or all of these specific details. In other instances, well known process operations have not been described in detail in order not to unnecessarily obscure the present invention.

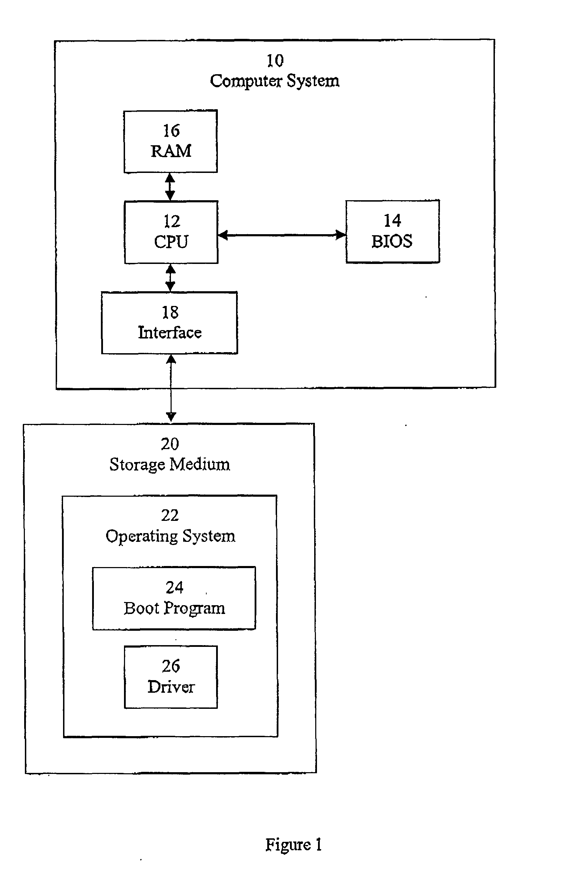

Figure 1 illustrates a schematic of a computer system 10 in accordance with one embodiment of the present invention. Computer system 10 comprises a Central Processing Unit (CPU) 12 coupled to a basic input/output system (BIOS) 14, a random access memory (RAM) 16 and an interface 18, which interfaces a storage medium 20 outside of computer system 10. Storage medium 20, where an operating system 22 is stored, may be detached from computer system 10. BIOS 14 provides instructions for execution by CPU 12.

When computer system 10 is powered on, BIOS 14 runs a diagnostic testing sequence, known as a power-on self-test (POST), to determine whether system hardware such as RAM 16, a hard disk, etc. are in place and operating properly. If a necessary hardware is not detected or is not operating properly, BIOS 14 issues an error message and loading of operating system 22 is halted.

Otherwise, BIOS 14 proceeds to locate a boot program 24 based on a boot sequence. The boot sequence is a list of storage media identified as boot devices in a system setup and the order in which BIOS 14 is to locate boot program 24.

Because storage medium 20 is listed as a first boot device in the boot sequence, BIOS 14 will first attempt to locate boot program 24 on storage medium 20. If boot program 24 is not available on storage medium 20 or if storage medium 20 is not attached to computer system 10, BIOS 14 will then attempt to locate boot program 24 from a subsequent boot device such as a hard disk or a floppy disk.

Once located, boot program 26 is loaded into RAM 16 and is in turn used to load operating system 22 into RAM 16. Thereafter, control of computer system 10 is turned over to operating system 12.

Storage medium 20 is preferably a solid-state non-volatile memory device such as a ThumbDrive (TD), a CompactFlash (CF) card, a Secure Digital (SD) card or a Memory Stick, to eliminate delays arising from having to activate mechanical parts before loading operating system 22 from a mechanical boot device such as a hard disk. Accordingly, interface 18 may be an appropriate interface for storage medium 20 such as, for example, a Universal Serial Bus (USB), a CompactFlash Input/Output (CF I/O), a Secure Digital Input/Output (SD I/O) or a Memory Stick Input/Output. The interface may be selected to be compatible with the IEEE 1394 (Firewire) Protocol,

Operating system 22 includes a driver 26 to convert input/output instructions from operating system 22 to messages that storage medium 20 can understand. In a preferred embodiment, driver 26 adapts interface 18 to a Small Computer System Interface (SCSI), which is typically used by computer systems to communicate with other peripheral hardware such as disk drives, printers, scanners, etc.

Including the driver 26 in the operating system 22 of the storage medium 20 allows the operating system 22 to be a larger, more powerful operating system, providing a more convenient user interface, such as Windows 2000, Linux, Mac OS, Virtual Memory System (VMS), OS/400 and AIX. The prior-art does not include this driver and therefore only allows the storage medium to provide a DOS operating system which the computer system 10 can load.

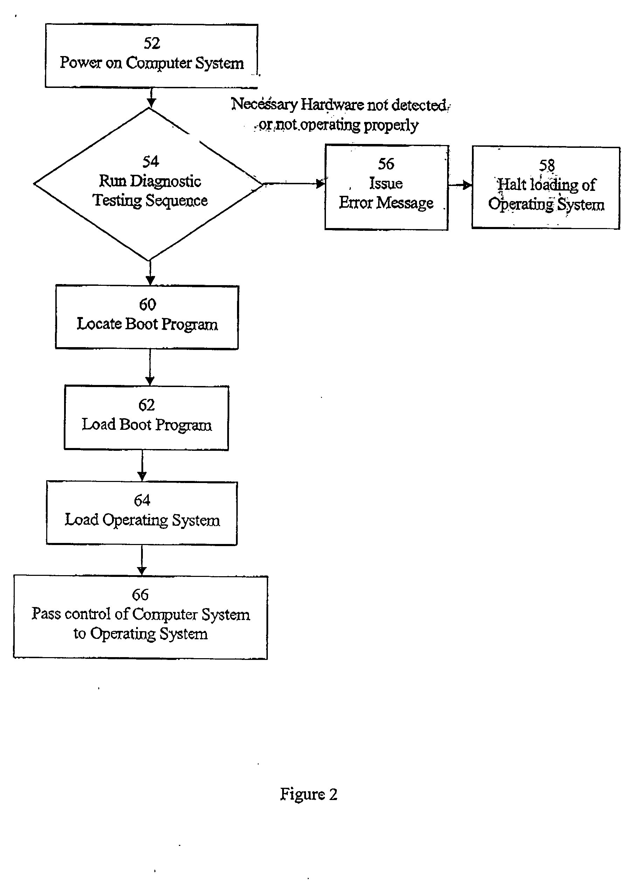

Figure 2 illustrates a method 50 to load an operating system in accordance with another embodiment of the present invention. After a computer system is powered on in a block 52, a BIOS runs in a decision block 54 a diagnostic testing sequence to determine whether system hardware such as RAM, a hard disk, etc. is in place and operating properly. An error message is issued in a block 56 and loading of the operating system is halted in a block 58 if a necessary hardware is not detected or not operating properly.

Otherwise, the BIOS attempts to locate in a block 60 a boot program based on a booting sequence with an external storage medium listed as a first boot device. The external storage medium is preferably a solid-state non-volatile memory device such as a ThumbDrive (TD), a CompactFlash (CF) card, a Secure Digital (SD) card or a Memory Stick. If the external storage medium is not detected or the boot program is not available on the external storage medium, the BIOS will attempt to locate the boot program on a subsequent boot device in the boot sequence.

Once located, the boot program is loaded in a block 62 into RAM and is in turn used to load in a block 64 the operating system into RAM. Control of the computer system is then passed in a block 66 to the operating system.

An advantage of the present invention is that the operating system is portable, that is, the same operating system may be loaded into various computer systems. This allows a user to load a desired operating system into any computer system without having to reconfigure the operating system each time he uses a new computer system.

Additionally, by storing the operating system in a solid-state non-volatile memory device, the operating system may be loaded almost instantaneously as no activation of mechanical parts is required. Power consumption of the computer system may also be reduced as less power is required to load the operating system from an electronic device as compared to the mechanical device in prior art computer systems.

The operating system may optionally be stored in a portion of the storage medium which is read-only memory. However, the storage medium preferably comprises at least a portion of read/write memory. The read/write memory may be arranged to receive and store user data from the computer system, and, upon receiving a read command from the computer system to transmit the stored user data to the computer. The user data may for example include software (e.g. application software) or data m some other format such as text files, etc. Thus, once the storage medium is connected to a computer system, and the computer has booted using the operating system, and the a user who operates the computer may have full access to his or her data stored in the storage medium.

Other embodiments of the invention will be apparent to those skilled in the art from consideration of the specification and practice of the invention. Furthermore, certain terminology has been used for the purposes of descriptive clarity, and not to limit the present invention. The embodiments and preferred features described above should be considered exemplary, with the invention being defined by the appended claims.

## Claims

1. A device having a connector for connecting the device to an interface of a computer system, the device having a storage medium storing an operating system including a boot program,
wherein the operating system includes a driver to convert an input/output instruction from the operating system to a message that the storage medium understands,
the device being operable, when the device is connected to the interface of a computer system having a RAM memory, to download the operating system directly into the RAM memory of the computer system, and
whereby using the device the operating system can be loaded from the device directly into the RAM memory of a plurality of computer systems.

2. The device as recited in claim 1, wherein the storage medium is a solid-state non-volatile memory device.

3. The device as recited in claim 2, wherein the solid-state non-volatile memory device is one of a group consisting of a ThumbDrive, a CompactFlash card, a Secure Digital card and a Memory Stick.

4. The device as recited in claim 1, wherein the storage medium includes a read/write memory for storing user data.

5. The device as recited in claim 1, wherein the interface is one of a group consisting of a Universal Serial Bus (USB), a CompactFlash Input/Output (CF I/O), a Secure Digital Input/Output (SD I/O) or a Memory Stick Input/Output.

6. A method to load an operating system, comprising:
locating a boot program based on a booting sequence, wherein an external storage medium is listed as a first boot device;
loading the boot program; and
loading the operating system, the operating system including a driver to convert an input/output instruction from the operating system to a message that the external storage medium understands.

7. The method to load an operating system as recited in claim 6, wherein the external storage medium is a solid-state non-volatile memory device.

8. The method to load an operating system as recited in claim 7, wherein the solid-state non-volatile memory device is one of a group consisting of a ThumbDrive, a CompactFlash card, a Secure Digital card and a Memory Stick.

9. The method to load an operating system as recited in claim 6, wherein the boot program is loaded from a subsequent boot device in the boot sequence if the external storage medium is not detected.

10. The method to load an operating system as recited in claim 6, wherein the boot program is loaded from a subsequent boot device in the boot sequence if the boot program is not available on the external storage medium.

11. The method to load an operating system as recited in claim 6, further comprising passing control of a computer system to the operating system.

12. A computer system comprising:
a Central Processing Unit;
a basic input/output system to instruct the Central Processing Unit;
an interface coupled to the Central Processing Unit, wherein the interface is to interface an external storage medium where an operating system is stored, the operating system including a driver to convert an input/output instruction from the operating system to a message that the external storage medium understands; and
a random access memory coupled to the Central Processing Unit, wherein the random access memory is where the operating system is to be loaded,
the computer system being arranged to load the operating system from the external storage medium into the random access memory.

13. The computer system as recited in claim 12, wherein the external storage medium is a solid-state non-volatile memory device.

14. The computer system as recited in claim 13, wherein the solid-state non-volatile memory device is one of a group consisting of a ThumbDrive, a CompactFlash card, a Secure Digital card and a Memory Stick.

15. The computer system as recited in claim 12, wherein the interface is one of a group consisting of a Universal Serial Bus (USB), a CompactFlash Input/Output (CF I/O), a Secure Digital Input/output (SD I/O) or a Memory Stick Input/Output.

16. The computer system as recited in claim 12, wherein the basic input/output system is to locate a boot program based on a boot sequence.

17. The computer system as recited in claim 16, wherein the external storage medium is a first boot device in the boot sequence.

18. The computer system as recited in claim 17, wherein the boot program is loaded from a subsequent boot device in the boot sequence if the external storage medium is not detected.

19. The computer system as recited in claim 17, wherein the boot program is loaded from a subsequent boot device in the boot sequence if the boot program is not available on the external storage medium.

20. The computer system as recited in claim 12, wherein the driver is to adapt the interface to a Small Computer System Interface.
